# EUROPEAN PATENT APPLICATION

(11) **EP 4 471 992 A1**
(43) Date of publication of application: **04.12.2024**
(21) Application number: 22923872.0
(22) Date of filing: 28.01.2022
(51) Int. Cl.: H01R 9/16

(54) **AIRTIGHT TERMINAL**

(71) Applicant: Ubukata Industries Co., Ltd., Aichi 457-0828 (JP)
(72) Inventor: MURATA, Hiroshi, Nagoya-shi, Aichi 457-0828 (JP); TODA, Takashi, Nagoya-shi, Aichi 457-0828 (JP); YUMIKAWA, Nobuo, Nagoya-shi, Aichi 457-0828 (JP)
(74) Representative: Schulz Junghans Patentanwälte PartGmbB
(86) International application number: PCT/JP2022/003363
(87) International publication number: WO 2023/145008

(57) **Abstract**

An airtight terminal (1) includes: a metal substrate (10) in which a plurality of through-holes (12) are formed; a plurality of conductive terminals each introduced through the respective through-holes; a glass filling material (30) that has an electrical insulating property, fills between the through-hole and the conductive terminal, and seals between the through-hole and the conductive terminal; a protective member (60) that is formed of a material with an electrical insulating property and elasticity and covers around the conductive terminal with the conductive terminal introduced in the protective member (60); and a locking portion (2, 3) that is provided in the conductive terminal or the glass filling material. The protective member includes a holding portion (63) that is provided in the protective member on a side opposite to a side of the metal substrate, is formed to have a smaller inner diameter than an outer diameter of the conductive terminal, and holds the conductive terminal, a deformable portion (621) that is provided on the side of the metal substrate with respect to the holding portion and is elastically deformable in a direction in which the deformable portion is compressed in contact with any one or both of the metal substrate and the glass filling material in a case in which the protective member is attached to the conductive terminal, and a restricting portion (65) that comes into contact with the locking portion and restricts movement of the protective member on the side of the metal substrate in the case in which the protective member is attached to the conductive terminal.

## Description

### Technical Field

Embodiments of the present invention relate to an airtight terminal.

### Background Art

An airtight terminal is formed by introducing a conductive terminal through a metal substrate. Also, a gap between the metal substrate and the conductive terminal is filled with a glass filling material with an electrical insulating property and is sealed in an airtight state. Applications of such an airtight terminal include, for example, an electric compressor for an electric vehicle and the like. Although electric compressors for electric vehicles driven at high voltages of 300 V to 600 V, for example, are the mainstream in the related art, electric compressors driven at low voltages such as 48 V, for example, have also started to appear on the market in recent years. In a case of an electric compressor driven at a low voltage, the voltage applied to an airtight terminal is low. Therefore, it is possible to shorten the insulating distance between a conductive terminal and a metal substrate, that is, it is possible to reduce the gap between the metal substrate and the conductive terminal, and to thereby reduce the size of the airtight terminal.

However, if the insulating distance between the metal substrate and the conductive terminal is shortened, an insulation failure due to accumulation of conductive foreign matters may become problematic. In other words, if foreign matters with conductivity adhere to and are accumulated on a surface of a glass filling material, for example, there is a concern that continuity may be established between the metal substrate and the conductive terminal by the accumulated materials and an insulation failure may occur.

### Citation List

### Patent Literature

Patent Literature 1: Japanese Patent Laid-Open No. 2019-212418

### Summary of Invention

### Technical Problem

The present invention has been made in view of the aforementioned circumstances, and an object thereof is to provide an airtight terminal capable of reducing adhesion and accumulation of conductive foreign matters, which may cause an insulation failure of the airtight terminal, in the surroundings of a conductive terminal.

### Solution to Problem

An airtight terminal according to an embodiment includes: a metal substrate in which a plurality of through-holes are formed; a plurality of conductive terminals each introduced through the respective through-holes; a glass filling material that has an electrical insulating property, fills between the through-hole and the conductive terminal, and seals between the through-hole and the conductive terminal; a protective member that is formed of a material with an electrical insulating property and elasticity and covers around the conductive terminal with the conductive terminal introduced in the protective member; and a locking portion that is provided in the conductive terminal or the glass filling material. The protective member includes a holding portion that is provided in the protective member on a side opposite to a side of the metal substrate, is formed to have a smaller inner diameter than an outer diameter of the conductive terminal, and holds the conductive terminal, a deformable portion that is provided on the side of the metal substrate with respect to the holding portion and is elastically deformable in a direction in which the deformable portion is compressed in contact with any one or both of the metal substrate and the glass filling material in a case in which the protective member is attached to the conductive terminal, and a restricting portion that comes into contact with the locking portion and restricts movement of the protective member on the side of the metal substrate in the case in which the protective member is attached to the conductive terminal.

### Brief Description of Drawings

[Figure 1] Figure 1 is a front view illustrating an example of an airtight terminal according to a first embodiment.
[Figure 2] Figure 2 is a plan view illustrating an example of the airtight terminal according to the first embodiment.
[Figure 3] Figure 3 is a diagram illustrating a section of an example of the airtight terminal according to the first embodiment in an enlarged manner.
[Figure 4] Figure 4 is a sectional view illustrating an example of a conductive terminal included in the airtight terminal according to the first embodiment.
[Figure 5] Figure 5 is a sectional view illustrating the airtight terminal according to the first embodiment in a further enlarged manner than the view illustrated in Figure 3, which depicts a state in which a protective member is not attached to the conductive terminal.
[Figure 6] Figure 6 is a sectional view illustrating the airtight terminal according to the first embodiment in a further enlarged manner than the view illustrated in Figure 3, which depicts a state in which the protective member is attached to the conductive terminal.
[Figure 7] Figure 7 is a diagram illustrating a section of an example of an airtight terminal according to a second embodiment in an enlarged manner.
[Figure 8] Figure 8 is a sectional view illustrating the airtight terminal according to the second embodiment in a further enlarged manner than the view illustrated in Figure 7, which depicts a state in which a protective member is not attached to a conductive terminal.
[Figure 9] Figure 9 is a sectional view illustrating the airtight terminal according to the first embodiment in a further enlarged manner than the view illustrated in Figure 7, which depicts a state in which the protective member is attached to the conductive terminal.
[Figure 10] Figure 10 is a plan view illustrating an example of an airtight terminal according to another embodiment.

### Description of Embodiments

Hereinafter, a plurality of examples of an airtight terminal will be described with reference to the drawings. Note that the same configurations in each embodiment will be denoted by the same reference signs, and description will be omitted.

### (First embodiment)

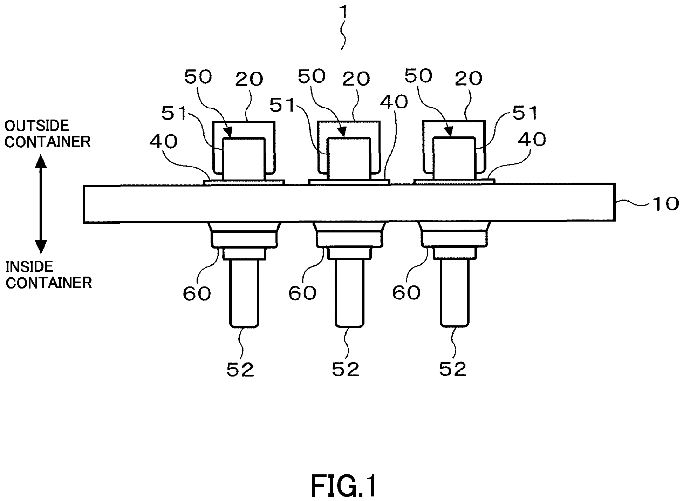

A first embodiment will be described with reference to Figures 1 to 6. An airtight terminal 1 illustrated in Figures 1 to 3 is used by being attached to an electric compressor for an electric vehicle, for example. Note that although the airtight terminal 1 according to the present embodiment is more suitable for an electric compressor driven at a low voltage, for example, the airtight terminal 1 can also be used for an electric compressor driven at a high voltage and an electric device other than the electric compressor.

As illustrated in Figures 1 to 3, the airtight terminal 1 includes a metal substrate 10, connection terminals 20, a glass filling material 30, insulating members 40, conductive terminals 50, and protective members 60. The metal substrate 10 is a member serving as a base of the airtight terminal 1 and is a member for attachment to an attachment target such as an electric compressor. The metal substrate 10 is made of metal such as carbon steel or stainless steel and is configured to include a plate-shaped member, for example. In the case of the present embodiment, the metal substrate 10 is formed into a flat plate shape as a whole. Note that it is only necessary for the metal substrate 10 to be flat in the surroundings of through-holes 12 and attachment holes 13, which will be described later, and it is not necessary to have a flat plate shape as a whole.

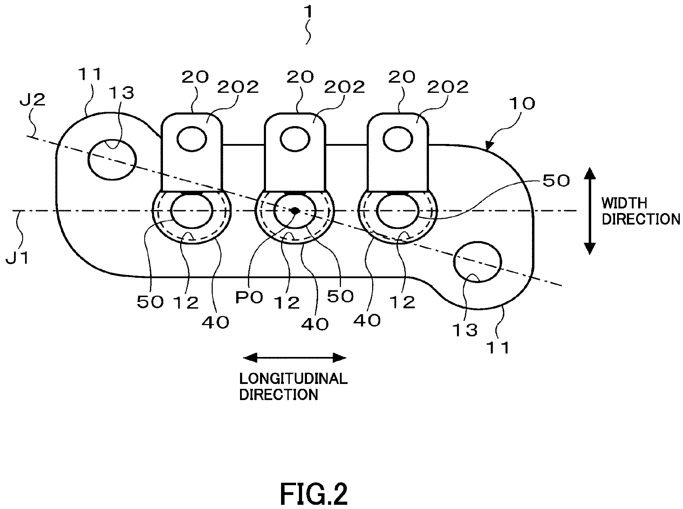

The metal substrate 10 is point-symmetrically formed with respect to a center P0 of the metal substrate 10 in a plan view as illustrated in Figure 2. The metal substrate 10 is formed into a shape that is long in one direction in a plane direction, for example, and includes, at both end portions in a longitudinal direction, two expanding portions 11 expanding in mutually opposite directions in a width direction of the metal substrate 10. The metal substrate 10 includes a plurality of through-holes 12 and a plurality of attachment holes 13. The number of through-holes 12 correspond to the number of conductive terminals 50. Also, the numbers of the through-holes 12 and the conductive terminals 50 are adjusted in accordance with an electric device to which the airtight terminal 1 is attached. In the case of the present embodiment, the metal substrate 10 includes two attachment holes 13 and three through-holes 12.

The through-holes 12 are formed to penetrate through the metal substrate 10 in circular shapes in a thickness direction. The through-holes 12 are for introducing the conductive terminals 50 therethrough. In the case of the present embodiment, the three through-holes 12 are disposed to be aligned on a straight line along the longitudinal direction of the metal substrate 10 as illustrated in Figure 2. In this case, the three through-holes 12 are disposed along a center line J1 passing through the center of the metal substrate 10 in the width direction and extending in the longitudinal direction of the metal substrate 10.

The attachment holes 13 are used when the airtight terminal 1 is attached to the attachment target. The attachment holes 13 are formed to penetrate through the metal substrate 10, for example. Fastening members such as screws, which are not illustrated, for example, are screwed into the electric device that is the attachment target through the attachment holes 13. In this manner, the metal substrate 10 of the airtight terminal 1 is fixed to the attachment target. In the case of the present embodiment, the attachment holes 13 are formed in the expanding portions 11. The two attachment holes 13 are disposed at positions deviating from the straight line J1 connecting the respective through-holes 12, that is, such positions that a straight line J2 connecting the two attachment holes 13 intersects the straight line J1. In this case, the straight line J2 connecting the two attachment holes 13 is set to pass through the center P0 of the metal substrate 10.

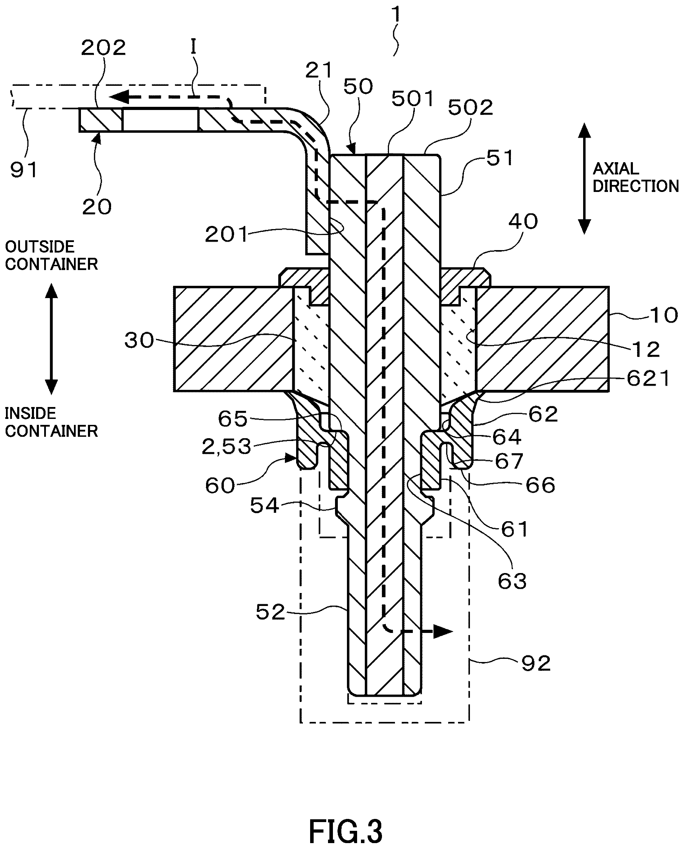

In a case in which the airtight terminal 1 is attached to the attachment target, the connection terminals 20 are located outside a container of the attachment target. The connection terminals 20 have a function of electrically connecting an external component 91 such as a circuit board and a bus bar illustrated by the two-dotted dashed line in Figure 3 to the conductive terminal 50. The connection terminal 20 is formed by bending a metal plate in a right-angle direction into an L shape, for example. The connection terminal 20 is formed of a metal plate such as a steel plate, a copper alloy, a composite material of a steel plate and copper or a copper alloy, or the like. The connection terminal 20 can be formed of a low-resistance cladding material formed of a copper plate, the opposite surfaces of which is sandwiched between iron plates, for example.

A surface 201 on one side of the connection terminal 20 with the bend part of the L shape located in between is electrically and physically connected to an outer peripheral surface of the conductive terminal 50 through welding, brazing, or the like. Also, a surface 202 on the other side of the connection terminal 20 with the bent part of the L shapes located in between are electrically and physically connected to the external component 91 through screwing, welding, brazing, or the like. In this case, the surface 202 of the connection terminal 20 that comes into contact with the external component 91 is provided at a position further away from the metal substrate 10 than an end portion of the conductive terminal 50. In other words, the connection terminal 20 is connected to the external component 91 at a position further away from the metal substrate 10 than the end portion of the conductive terminal 50 in a view in an extending direction of the conductive terminal 50, that is, an axial direction of the conductive terminal 50.

Also, in the case of the present embodiment, each connection terminal 20 includes an elastic portion 21 as illustrated in Figure 3. The elastic portion 21 is located between a region 201 of the connection terminal 20 connected to the conductive terminal 50 and a region 202 connected to the external component 91 and is configured to be easily elastically deformed as compared with the other regions 201 and 202 of the connection terminal 20. In the case of the present embodiment, the elastic portion 21 is a part that is located between the region 201 of the connection terminal 20 connected to the conductive terminal 50 and the region 202 connected to the external component 91 and is bent substantially at a right angle. The elastic portion 21 has a function of absorbing and mitigating distortion and vibration transmitted between the external component 91 and the conductive terminal 50.

The glass filling material 30 can be formed of soft glass with an electrical insulating property such as soda barium glass, for example. The glass filling material 30 seals a part between an inner diameter part of the through-hole 12 and an outer diameter part of the conductive terminal 50 by filling between the through-hole 12 and the conductive terminal 50 in the metal substrate 10 and being solidified. In this manner, the glass filling material 30 seals the surroundings of the conductive terminal 50 in an airtight state and supports and fixes the conductive terminal 50 in a state in which the conductive terminal 50 and the metal substrate 10 are insulated.

The insulating member 40 is formed of a member with an electrical insulating property and rigidity, for example, engineering plastic or ceramics. The insulating member 40 is provided at a position in the metal substrate 10 outside the compressor container in the case in which the airtight terminal 1 is attached to the electric compressor or the like. The insulating member 40 is formed into a so-called stepped flange shape. The conductive terminal 50 is introduced in the insulating member 40. Also, a part of the insulating member 40 is inside the through-hole 12, and the insulating member 40 covers the outer surface of the glass filling material 30 and the surroundings of the through-hole 12 in the metal substrate 10.

The conductive terminal 50 is formed into a columnar rod shape as a whole using a metal material with conductivity. The conductive terminal 50 is introduced through the through-hole 12 and penetrates through the metal substrate 10 in the thickness direction. The conductive terminal 50 and the metal substrate 10 are insulated by the glass filling material 30. The conductive terminal 50 has a function of electrically connecting the inside and the outside of a tightly closed container to which the airtight terminal 1 is attached. The aforementioned external component 91 is connected to the end portion of the conductive terminal 50 on the outer side of the electric compressor. Also, the end portion of the conductive terminal 50 on the inner side of the electric compressor is inserted into a receptacle terminal 92, for example. The receptacle terminal 92 is to be connected to a motor winding or the like of the electric compressor, for example.

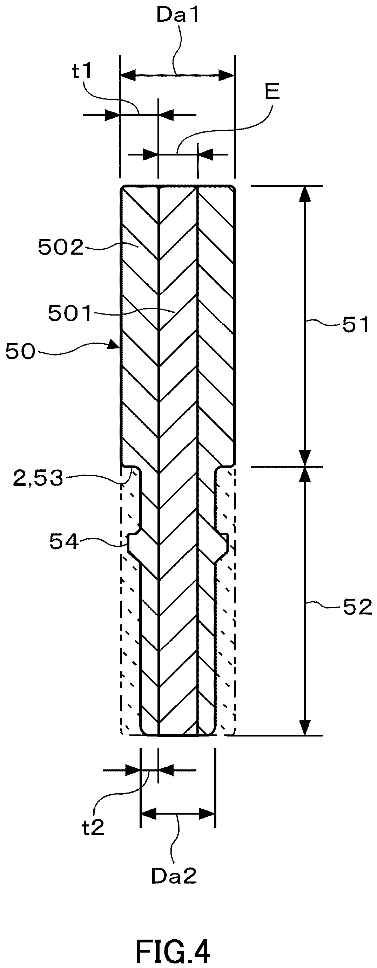

The conductive terminal 50 is formed into a so-called stepped columnar rod shape including a stepped portion 53 by having a large diameter portion 51 and a small diameter portion 52 with different outer diameters as illustrated in Figure 4 as well. The large diameter portion 51 is configured to include a region covered with the glass filling material 30 as illustrated in Figure 3. The large diameter portion 51 includes a part of the conductive terminal 50 exposed to the outside of the attachment target in the case in which the airtight terminal 1 is attached to the attachment target. In other words, the part of the conductive terminal 50 to which the external component 91 is attached is formed in the large diameter portion 51. Moreover, the small diameter portion 52 includes a part of the conductive terminal 50 located inside the attachment target in the case in which the airtight terminal 1 is attached to the attachment target. In other words, the part of the conductive terminal 50 inserted into the receptacle terminal 92 is formed in the small diameter portion 52.

An outer diameter Da2 of the small diameter portion 52 is set to be smaller than an outer diameter Da1 of the large diameter portion 51 as illustrated in Figure 4 as well. The outer diameter Da1 of the large diameter portion 51 can be set within a range of 4.6 mm to 6.0 mm, for example. In this case, the outer diameter Da2 of the small diameter portion 52 can be set within a range of 3.0 mm to 3.4 mm.

Also, the conductive terminal 50 further includes a retainer portion 54. The retainer portion 54 has a function of reducing falling-off of the protective member 60 attached to the conductive terminal 50 from the conductive terminal 50. The retainer portion 54 is provided at a midway part of the entire length of the small diameter portion 52. The retainer portion 54 is provided on the side opposite to the metal substrate 10 with respective to the protective member 60, that is, on the side of the distal end of the conductive terminal 50 and is formed to project outward in the radial direction of the conductive terminal 50 as illustrated in Figure 3. The retainer portion 54 may have a seamless structure integrated with the small diameter portion 52. Moreover, the retainer portion 54 may have a configuration in which an annular member formed separately from the small diameter portion 52 is fixed to the small diameter portion 52 through welding or the like, for example.

The conductive terminal 50 is formed of a composite material containing copper as a core material. In the case of the present embodiment, the conductive terminal 50 is configured to include a core material 501 and an outer skin material 502. The core material 501 is provided at the center of the conductive terminal 50 in the radial direction. The core material 501 is formed of a member that has a lower electrical resistance than the outer skin material 502, for example, oxygen-free copper. As illustrated in Figure 4, an outer diameter E of the core material 501 is constant over the entire length of the conductive terminal 50.

The outer skin material 502 is located outward in the radial direction of the conductive terminal 50, covers around the core material 501, and constitutes the outer surface of the conductive terminal 50. The outer skin material 502 is formed of a member having a higher electrical resistance than the core material 501 while having higher strength, that is, higher rigidity and heat resistance than the outer skin material 502 so that the member has excellent plating workability, welding operability, and the like. Moreover, the outer skin material 502 is formed of a member with a thermal expansion coefficient that is equivalent to that of the glass filling material 30 or has a value between those of the glass filling material 30 and of the core material 501. The outer skin material 502 can be formed of an Fe-Ni alloy or an Fe-Cr alloy, for example.

The small diameter portion 52, the stepped portion 53, and the retainer portion 54 can be produced by cutting and removing the outer skin material 502 at the part illustrated as the two-dotted dashed line part in Figure 4 from a columnar rod-shaped member with the constant outer diameter Da1, for example. In this case, a thickness t2 of the outer skin material 502 at the small diameter portion 52 is thinner than a thickness t1 at the large diameter portion 51. In other words, the thickness dimension t1 of the outer skin material 502 at the large diameter portion 51 is larger than the thickness dimension t2 of the outer skin material 502 at the small diameter portion 52.

Here, the temperature of the glass filling material 30 reaches about 900°C to 1000°C when the surroundings of the conductive terminal 50 is sealed by the glass filling material 30. Therefore, there is a concern that a clearance may occur at a bonding interface due to a difference between expansion coefficients of the core material 501 and of the glass filling material 30 at the time of cooling in the configuration in which the conductive terminal 50 does not include the outer skin material 502, that is, in a case of a configuration including only the core material 501, for example. Also, such a clearance may cause a failure in air tightness in the airtight terminal 1. Therefore, the conductive terminal 50 in the present embodiment includes the outer skin material 502. The outer skin material 502 functions as a buffer member that mitigates the difference between the expansion coefficients of the core material 501 and of the glass filling material 30. Also, the outer diameter E of the core material 501 is set to be less than 50% of the outer diameter Da1 of the large diameter portion 51. It is thus possible to sufficiently mitigate the difference between the expansion coefficients of the core material 501 and of the glass filling material 30.

In this case, the outer diameter E of the core material 501 is preferably equal to or less than 42% of the outer diameter Da1 of the large diameter portion 51. Also, the thickness dimension t1 of the outer skin material 502 at the large diameter portion 51 is set to be equal to or greater than double the thickness dimension t2 of the outer skin material 502 at the small diameter portion 52. Additionally, the thickness dimension t1 of the outer skin material 502 at the large diameter portion 51 is set to be equal to or greater than 1 mm, and the thickness dimension t2 of the outer skin material 502 at the small diameter portion 52 is set to be equal to or greater than 0.5 mm.

The airtight terminal 1 further includes a locking portion 2. The locking portion 2 is provided in the glass filling material 30 or the conductive terminal 50 and has a function of locking at the protective member 60 and defining the position of the protective member 60. In the case of the present embodiment, the locking portion 2 is formed of the stepped portion 53 formed at the boundary part between the large diameter portion 51 and the small diameter portion 52 of the conductive terminal 50.

The protective member 60 is formed of a material with an electrical insulating property and elasticity, for example, a rubber material such as hydrogenated nitrile rubber. The protective member 60 is detachably attached to a part of the conductive terminal 50 that is to be located inside the compressor container of the attachment target. The protective member 60 is formed into a tubular shape as a whole and covers around the conductive terminal 50 with the conductive terminal 50 introduced in the tubular shape. An end portion of the protective member 60 on the side of the metal substrate 10 comes into close contact with the metal substrate 10 or the glass filling material 30. The protective member 60 has a function of reducing invasion of conductive foreign matters such as metal powder contained in a refrigerant or a lubricant and generated through friction or the like of the compression mechanism into the surroundings of the conductive terminal 50 on the surface of the glass filling material 30. In other words, the protective member 60 has a function of protecting the airtight terminal 1 from an insulation failure caused by accumulation of the conductive foreign matters.

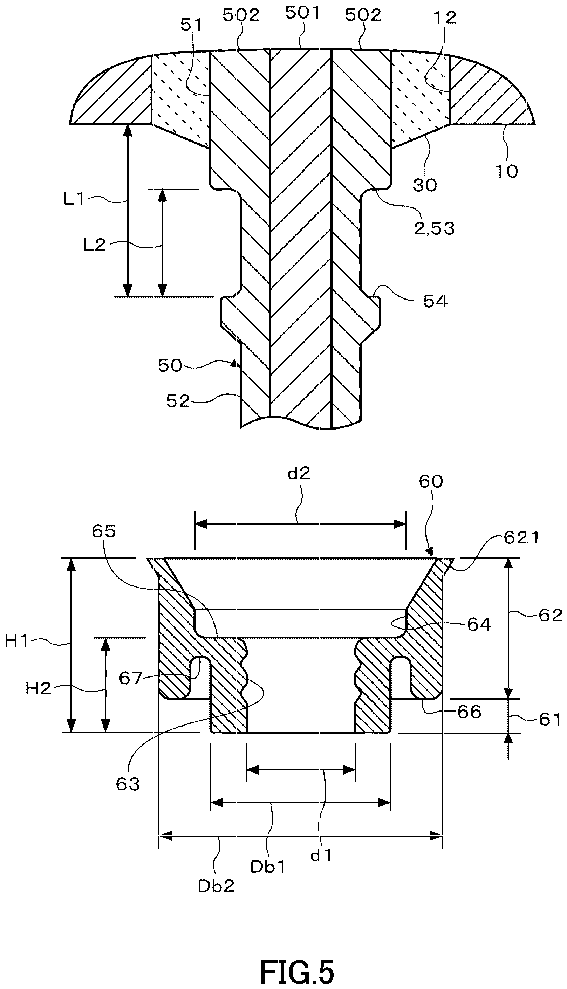

The protective member 60 is formed into a stepped cylindrical shape as a whole as illustrated in Figure 5 as well. The protective member 60 includes a distal end portion 61 and a proximal end portion 62. The distal end portion 61 is a part of the protective member 60 located on the side opposite to the metal substrate 10. The proximal end portion 62 is a part of the protective member 60 located on the side of the metal substrate 10. An outer diameter Db1 of the distal end portion 61 is smaller than an outer diameter Db2 of the proximal end portion 62. The protective member 60 is formed into a stepped cylindrical shape as a whole by a difference between outer diameters of the distal end portion 61 and of the proximal end portion 62.

Also, the protective member 60 includes a holding portion 63, a non-contact portion 64, a restricting portion 65, and a receiving portion 66. The holding portion 63, the non-contact portion 64, and the restricting portion 65 are provided inside the tubular shape of the protective member 60. The holding portion 63 is provided in the protective member 60 on the side opposite to the side of the metal substrate 10, that is, on the side opposite to the metal substrate 10 with respect to the restricting portion 65. The holding portion 63 is provided over the entire region inside the distal end portion 61 and a part of the inside of the proximal end portion 62. An inner diameter d1 of the holding portion 63 is smaller than an outer diameter of the conductive terminal 50, in this case, the outer diameter Da2 of the small diameter portion 52. Also, a plurality of projecting and recessed shapes or groove shapes are formed on the inner surface of the holding portion 63. In this manner, the holding portion 63 tightens and holds the small diameter portion 52 of the conductive terminal 50 in the case in which the protective member 60 is attached to the conductive terminal 50.

The non-contact portion 64 is provided at an inner part of the proximal end portion 62 and is formed into a cylindrical shape connected to the holding portion 63. An inner diameter d2 of the non-contact portion 64 is larger than an inner diameter d1 of the holding portion 63 and is larger than the outer diameter of the conductive terminal 50, in this case, the outer diameter Da1 of the large diameter portion 51. Therefore, the inner surface of the non-contact portion 64 does not come into contact with the outer surface of the conductive terminal 50, and a clearance S1 is formed between the non-contact portion 64 and the conductive terminal 50, in the case in which the protective member 60 is attached to the conductive terminal 50.

The restricting portion 65 is provided on the side of the metal substrate 10 with respect to the holding portion 63. The restricting portion 65 has a function of coming into contact with the locking portion 2 and restricting movement of the protective member 60 to the side of the metal substrate 10 in the case in which the protective member 60 is attached to the conductive terminal 50. In the case of the present embodiment, the restricting portion 65 is constituted by a bottom part of the non-contact portion 64, that is, a stepped part formed between the holding portion 63 and the non-contact portion 64.

The receiving portion 66 is located outside the protective member 60 and is formed at the stepped part formed by the difference between the outer diameters of the distal end portion 61 and of the proximal end portion 62. The receiving portion 66 comes into contact with the receptacle terminal 92 when the small diameter portion 52 of the conductive terminal 50 is inserted into the receptacle terminal 92 by an amount exceeding a predetermined amount as illustrated in Figure 3. It is thus possible to reduce excessive insertion of the conductive terminal 50 into the receptacle terminal 92.

Also, the proximal end portion 62 is configured to include a deformable portion 621. In other words, the protective member 60 integrally includes the deformable portion 621. The deformable portion 621 is provided in the protective member 60 on the side of the metal substrate 10 with respect to the holding portion 63. In other words, the deformable portion 621 is a part that is located at the proximal end portion 62 on the side of the metal substrate 10 and comes into contact with any one or both of the metal substrate 10 and the glass filling material 30 in the case in which the protective member 60 is attached to the conductive terminal 50.

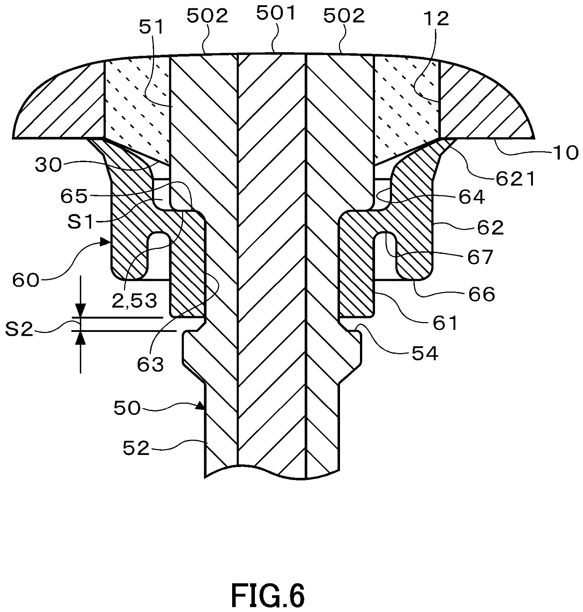

The deformable portion 621 is elastically deformed mainly in a direction in which the protective member 60 is compressed, that is, in a direction in which the protective member 60 is pushed toward the metal substrate 10 when the protective member 60 is attached to the conductive terminal 50 and is pushed toward the metal substrate 10 as illustrated in Figure 6. Also, the inner diameter of the deformable portion 621 is larger than the outer diameter of the conductive terminal 50, in this case, the outer diameter Da1 of the large diameter portion 51. Moreover, the inner diameter of the deformable portion 621 is larger than the inner diameter d2 of the non-contact portion 64.

In the case of the present embodiment, the deformable portion 621 is formed to be thinner than a part of the protective member 60 other than the deformable portion 621. Therefore, the deformable portion 621 is more likely to be elastically deformed as compared with the part of the protective member 60 other than the deformable portion 621 in a case in which the protective member 60 receives a load of compression in the axial direction of the protective member 60. In other words, the part of the protective member 60 other than the deformable portion 621 is unlikely to be deformed even in the case in which a load of compression in the axial direction of the protective member 60 is received.

The deformable portion 621 is formed into a funnel shape or a truncated cone shape spreading outward in the radial direction of the conductive terminal 50 from the side of the distal end portion 61 toward the side of the proximal end portion 62 as illustrated in Figure 5 and the like. Therefore, the deformable portion 621 is elastically deformed so as to spread not only in the direction in which the protective member 60 is compressed but also outward in the radial direction of the proximal end portion 62, that is, outward in the radial direction of the conductive terminal 50 when the protective member 60 is attached to the conductive terminal 50 and is pushed toward the metal substrate 10. In this manner, once the protective member 60 is attached to the conductive terminal 50, the deformable portion 621 comes into strong and close contact with any one or both of the metal substrate 10 and the glass filling material 30.

Here, a length dimension of a natural length of the protective member 60 in a case in which no load is applied to the protective member 60 and the protective member 60 is not elastically deformed is defined as H1, and a length dimension of the holding portion 63 is defined as H2. A distance dimension L1 between the part of the metal substrate 10 or the glass filling material 30 with which the deformable portion 621 comes into contact and the retainer portion 54 is set to be equal to or less than the length dimension H1 of the natural length of the protective member 60. In the case of the present embodiment, the deformable portion 621 mainly comes into contact with the metal substrate 10. Therefore, the distance dimension L1 between the metal substrate 10 and the retainer portion 54 is set to be equal to or less than the length dimension H1 of the natural length of the protective member 60. Also, a distance dimension L2 between the locking portion 2 and the retainer portion 54 is set to be longer than the length dimension H2 of the holding portion 63. In this case, the holding portion 63 is disposed between the locking portion 2 and the retainer portion 54 as illustrated in Figure 6, and a clearance S2 is formed between the protective member 60 and the retainer portion 54, once the protective member 60 is pushed toward the metal substrate 10 until the restricting portion 65 comes into contact with the locking portion 2.

Also, the protective member 60 can be configured to further include a groove portion 67. The groove portion 67 is provided between the distal end portion 61 and the proximal end portion 62. The groove portion 67 is formed into a groove shape surrounding an outer periphery of the distal end portion 61 and obtained by recessing the stepped part formed by the difference between the outer diameters of the distal end portion 61 and of the proximal end portion 62 on the side of the deformable portion 621, that is, on the side of the proximal end portion 62. In other words, the receiving portion 66 is formed into an annular projecting shape surrounding the surroundings of the distal end portion 61 by the groove portion 67.

Next, a procedure of attaching and detaching the protective member 60 will be described. In the above configuration, the protective member 60 is attached to the conductive terminal 50 after sealing with the glass filling material 30 is performed, for example. The protective member 60 is introduced through the small diameter portion 52 from the distal end side of the small diameter portion 52 and is pushed toward the metal substrate 10. Once the holding portion 63 exceeds the retainer portion 54, the holding portion 63 enters between the locking portion 2 and the retainer portion 54. In this manner, the holding portion 63 pushes and holds the small diameter portion 52 inward in the radial direction with an elastic force of the holding portion 63.

Then, once the protective member 60 is further pushed toward the metal substrate 10, the deformable portion 621 comes into contact with one or both of the metal substrate 10 and the glass filling material 30 and is then elastically deformed. In this manner, the deformable portion 621 strongly comes into close contact with the one or both of the metal substrate 10 and the glass filling material 30. Then, once the restricting portion 65 comes into contact with the locking portion 2, movement of the protective member 60 toward the metal substrate 10 is restricted. In this manner, the position of the protective member 60 with respect to the metal substrate 10 and the conductive terminal 50 is fixed, and the protective member 60 is attached to the conductive terminal 50. In this case, the restricting portion 65 and the locking portion 2 define the amount of deformation, that is, the amount of crushing of the deformable portion 621. Also, for removal of the protective member 60, an operator can pull out the protective member 60 from the conductive terminal 50 by pulling the deformable portion 621 and spreading the entire protective member 60, for example.

According to the embodiment described above, the airtight terminal 1 includes the metal substrate 10, the plurality of conductive terminals 50, the glass filling material 30, the protective members 60, and the locking portions 2. The plurality of through-holes 12 are formed in the metal substrate 10. The conductive terminals 50 are introduced through the respective through-holes 12. The glass filling material 30 includes an electrical insulating property, fills between the through-hole 12 and the conductive terminal 50, and seals between the through-hole 12 and the conductive terminal 50. The protective member 60 is formed of a material with an electrical insulating property and elasticity and covers around the conductive terminal 50 with the conductive terminal 50 introduced therein. The locking portion 2 is provided in either the conductive terminal 50 or the glass filling material 30.

Also, the protective member 60 includes the holding portion 63 and the deformable portion 621. The holding portion 63 is provided in the protective member 60 on the side opposite to the side of the metal substrate 10. The holding portion 63 is formed to have the inner diameter that is smaller than the outer diameter of the conductive terminal 50, in this case, the outer diameter Da2 of the small diameter portion 52, and has a function of holding the conductive terminal 50. The deformable portion 621 is provided at the end portion on the side of the metal substrate 10 and is configured to be elastically deformable in a direction in which the deformable portion 621 is compressed in contact with any one or both of the metal substrate 10 and the glass filling material 30 in the case in which the protective member 60 is attached to the conductive terminal 50.

Accordingly, the deformable portion 621 comes into close contact with any one or both of the metal substrate 10 and the glass filling material 30, the protective member 60 covers around the conductive terminal 50, and it is thus possible to reduce adhesion and accumulation of conductive foreign matters, which may cause an insulation failure of the airtight terminal 1, to and on the surroundings of the conductive terminal 50.

Here, the present inventor discovered that if the protective member 60 were excessively pushed toward the metal substrate 10 when the protective member 60 were attached to the conductive terminal 50, the deformable portion 621 were excessively deformed and the deformable portion 621 were flipped, that is, got warped. Also, if the deformable portion 621 got warped, a clearance may occur between the metal substrate 10 or the glass filling material 30 and the deformable portion 621, and as a result, foreign matters may become likely to enter the inside of the protective member 60.

Thus, the protective member 60 further includes the restricting portion 65 in the present embodiment. The restricting portion 65 comes into contact with the locking portion 2 and restricts movement of the protective member 60 on the side of the metal substrate 10 in the case in which the protective member 60 is attached to the conductive terminal 50. Accordingly, it is possible to reduce excessing pushing of the protective member 60 on the side of the metal substrate 10 and warpage of the deformable portion 621 when the protective member 60 is attached to the conductive terminal 50. In this manner, it is possible to appropriately attach the protective member 60 to the conductive terminal 50. As a result, according to the present embodiment, it is possible to more reliably reduce adhesion and accumulation of conductive foreign matters to and on the surroundings of the conductive terminal 50.

The protective member 60 is configured to be attachable to and detachable from the conductive terminal 50. Accordingly, it is possible to easily replace the protective member 60 in a case in which the protective member 60 is degraded, for example.

The deformable portion 621 is formed to have the inner diameter that is larger than the outer diameter of the conductive terminal 50, in this case, the outer diameter Da1 of the large diameter portion 51. Also, the deformable portion 621 is configured to be elastically deformable in the direction in which the deformable portion 621 spreads outward in the radial direction of the conductive terminal 50, in the case in which the protective member 60 is attached to the conductive terminal 50. Therefore, according to the present embodiment, it is possible to cause the deformable portion 621 to more strongly come into close contact with the metal substrate 10 or the glass filling material 30 at the part at which the deformable portion 621 comes into contact with them. In this manner, it is possible to further effectively reduce invasion of conductive foreign matters to the inside of the protective member 60.

Also, the protective member 60 includes the distal end portion 61 and the proximal end portion 62. The outer diameter Db1 of the distal end portion 61 is set to be smaller than the outer diameter Db2 of the proximal end portion 62. The distal end portion 61 has the holding portion 63 and is provided on the side opposite to the metal substrate 10 with respect to the proximal end portion 62. Also, the proximal end portion 62 is configured to include the deformable portion 621.

Here, if the protective member 60 is pushed against the metal substrate 10, the deformable portion 621 provided at the proximal end portion 62 is deformed and comes into close contact with the metal substrate 10. However, if the deformation of the deformable portion 621 reaches the holding portion 63 at the distal end portion 61, and the inside of the holding portion 63 spreads, the holding force of the holding portion 63 with respect to the conductive terminal 50 decreases, and the protective member 60 becomes likely to come off.

Thus, the protective member 60 in the present embodiment further includes the groove portion 67. The groove portion 67 is provided between the distal end portion 61 and the proximal end portion 62. The groove portion 67 surrounds the outer periphery of the distal end portion 61 and is formed into the groove shape obtained by recessing the stepped part formed by the difference between the outer diameters of the distal end portion 61 and of the proximal end portion 62, in this case, the surface where the receiving portion 66 is formed on the side of the deformable portion 621.

Accordingly, it is possible to reduce reaching of the deformation of the deformable portion 621 to the holding portion 63 by providing the groove portion 67 between the distal end portion 61 where the holding portion 63 is included and the proximal end portion 62 where the deformable portion 621 is included. As a result, it is possible to more reliably prevent the protective member 60 from coming off.

The conductive terminal 50 further includes the retainer portion 54. The retainer portion 54 is provided on the side opposite to the metal substrate 10 with respect to the protective member 60. The retainer portion 54 projects outward in the radial direction of the conductive terminal 50 and is formed to have the outer diameter that is larger than the outer diameter of the holding portion. The retainer portion 54 comes into contact with the protective member 60 and restricts further movement of the protective member 60, in a case in which the protective member 60 attached to the conductive terminal 50 receives vibration or the like and is about to move on the side opposite to the metal substrate 10, that is, on the distal end side of the small diameter portion 52.

In other words, the retainer portion 54 has the function of reducing falling-off of the protective member 60 from the conductive terminal 50. In this manner, it is possible to reduce coming-off of the protective member 60 from the conductive terminal 50, in a case in which the airtight terminal 1 is handled, during ordinary utilization of a device to which the airtight terminal 1 is attached, or the like. Therefore, according to the present embodiment, it is possible to secure the attachment of the protective member 60 to the conductive terminal 50, and as a result, it is possible to further reliably reduce adhesion and accumulation of conductive foreign matters, which may cause an insulation failure of the airtight terminal 1, to and on the surroundings of the conductive terminal 50.

The distance dimension L2 between the locking portion 2 and the retainer portion 54 is set to be longer than the length dimension H2 of the holding portion 63. Accordingly, it is possible to reliably dispose the holding portion 63 between the locking portion 2 and the retainer portion 54. In other words, it is possible to reduce situations in which the retainer portion 54 is located inside the holding portion 63 and the inner surface of the holding portion 63 floats from the outer surface of the conductive terminal 50. It is thus possible to more reliably bring the inner surface of the holding portion 63 into contact with the outer surface of the conductive terminal 50, when the protective member 60 is attached to the conductive terminal 50. As a result, the holding portion 63 can strongly hold the outer surface of the conductive terminal 50.

The metal substrate 10 includes the two attachment holes 13. The attachment holes 13 are formed to penetrate through the metal substrate 10, and fastening members, which are not illustrated, for attaching the metal substrate 10 to the attachment target are introduced therethrough. Also, each attachment hole 13 is disposed at such a position that the straight line J2 connecting the two attachment holes 13 intersects the straight line J1 connecting the respective through-holes 12 as illustrated in Figure 2.

Accordingly, it is possible to minimize influences on parts sealed with the glass filling material 30, in a case in which the container of the electric compressor or the like, to which the airtight terminal 1 is attached, for example, expands or contracts and is deformed due to a pressure, heat generation, or the like, and distortion occurs in the metal substrate 10 with the deformation.

In other words, the deformation of the container of the electric compressor or the like is transmitted to the attachment hole 13 parts, which are locations of connection to the container, and works to deform the metal substrate 10 in the direction in which the metal substrate 10 is curved along the straight line J2 connecting the attachment holes 13. In this case, the part of the metal substrate 10 along the straight line J1 intersecting the straight line J2 is unlikely to be deformed. Therefore, it is possible to minimize influences on the parts sealed with the glass filling material 30, that is, the surroundings of the through-holes 12 by arranging the respective attachment holes 13 such that the straight line J2 connecting the two attachment holes 13 intersects the straight line J1 connecting the respective through-holes 12. It is thus possible to effectively reduce occurrence of a failure in air tightness at the parts sealed with the glass filling material 30.

Here, in a case in which the attachment target of the airtight terminal 1 is assumed to be an electric compressor driven at a low voltage of 48 V, for example, a current distributed to the airtight terminal 1 increases as compared with a case in which the attachment target is a conventional compressor driven at a high voltage of 300 V to 600 V. In the case of the electric compressor driven at 300 V to 600 V, for example, the current distributed to the airtight terminal 1 is about 10 A to 20 A. On the contrary, in the case of the electric compressor driven at 48 V, the current distributed to the airtight terminal 1 is as large as 100 A to 120 A.

In view of the above circumstances, it is necessary to cause the conductive terminal 50 to accommodate the large current in order to cause the airtight terminal 1 to accommodate the low-voltage electric compressor. However, in a case in which the conductive terminal 50 is formed of a low-resistance material such as a copper alloy or an aluminum alloy, differences in heat resistance and thermal expansion coefficients of the conductive terminals 50 become problematic at the time of sealing with the glass filling material 30. Therefore, using a material for so-called glass sealing, such as an Fe-Ni alloy or an Fe-Cr alloy, for the conductive terminals 50 in order to reduce influences of heat at the time of the sealing, is conceivable. However, since the material for glass sealing has a higher electrical resistance than the low-resistance materials such as the copper alloy and the aluminum alloy, the conductive terminal 50 is thickened, and the size of the airtight terminal 1 increases, when an attempt is made to cause the conductive terminal 50 to accommodate the large current.

Thus, the conductive terminal 50 in the present embodiment includes the core material 501 and the outer skin material 502. In other words, the conductive terminal 50 is formed of a composite material including the core material 501 and the outer skin material 502. The core material 501 is formed to have a constant outer diameter E. The outer skin material 502 is formed of a member that has higher rigidity and heat resistance than the core material 501 and has a thermal expansion coefficient that is equivalent to that of the glass filling material 30 or has a value between those of the glass filling material 30 and of the core material 501.

Accordingly, it is possible to minimize the electric resistance of the entire conductive terminal 50 and to minimize influences of heat at the time of the sealing by covering the core material 501 having a low electrical resistance with the outer skin material 502 having higher rigidity and heat resistance than the core material 501. Accordingly, it is possible to make the conductive terminal 50 thinner and to reduce an increase in size of the conductive terminal 50 as compared with a case in which the conductive terminal 50 is formed only of the material for glass sealing, and it is possible to reduce influences of heat on the conductive terminal 50 at the time of the sealing as compared with the case in which the conductive terminal 50 is formed only of the material with a low resistance.

Although it is possible to minimize an increase in size of the conductive terminal 50 while causing the conductive terminal 50 to accommodate the large current according to the above configuration, the conductive terminal 50 tends to be thick as compared with the conventional configuration. Also, if the conductive terminal 50 is thick, a problem that an insertion and pulling-out load acting on the receptacle terminal 92 connected to a motor winding, for example, increases and degradation of workability at the time of attaching the airtight terminal 1 may occur.

On the contrary, the present inventor has focused on the fact that a power distribution route in the airtight terminal 1 is mainly a route as illustrated by the broken line I in Figure 3. In the route illustrated by the broken line I, the current passes through the outer skin material 502 from an outer circumferential surface at one of end portions of the conductive terminal 50, is transmitted through the core material 501, reaches the other end, then passes through the outer skin material 502, and exits the outer circumferential surface of the other end portion of the conductive terminal 50 to the outside. In other words, the current enters and exits the core material 501 via the outer skin material 502. The present inventor discovered through focusing on this point that it is possible to achieve both reduction of resistant components on the power distribution route illustrated by the broken line I and reduction of the insertion and pulling-out load through making the conductive terminal 50 thin by reducing the thickness dimension of only the outer skin material 502 at the part where the outer skin material 502 comes into contact with the receptacle terminal 92.

In other words, the conductive terminal 50 in the embodiment further includes the large diameter portion 51 and the small diameter portion 52. The large diameter portion 51 is a part of the conductive terminal 50 covered with the glass filling material 30. In the case of the present embodiment, the large diameter portion 51 includes the part exposed to the outside of the container to which the airtight terminal 1 is attached and the part sealed with the glass filling material 30. The small diameter portion 52 is provided in the conductive terminal 50 on the side opposite to the metal substrate 10 with respect to the large diameter portion 51. The outer diameter of the small diameter portion 52 is set to be smaller than that of the large diameter portion 51. In other words, the outer diameter Da2 of the small diameter portion 52 is smaller than the outer diameter Da1 of the large diameter portion 51.

Also, the small diameter portion 52 is formed by making the thickness of the outer skin material 502 thinner than the large diameter portion 51. In other words, the thickness dimension t2 of the outer skin material 502 at the small diameter portion 52 is smaller than the thickness dimension t1 of the outer skin material 502 at the large diameter portion 51.

Accordingly, the part of the conductive terminal 50 covered with the glass filling material 30 is formed of the large diameter portion 51 having a larger diameter than the small diameter portion 52. Therefore, according to the present embodiment, the part of the conductive terminal 50 covered with the glass filling material 30 is thickened, and it is thus possible to minimize influences of heat on the conductive terminal 50 at the time of the sealing. Also, the small diameter portion 52 is provided in the conductive terminal 50 on the side opposite to the metal substrate 10 with respect to the large diameter portion 51. Accordingly, it is possible to reduce the insertion and pulling-out load when the conductive terminal 50 is inserted into the receptacle terminal 92, for example, by adopting the small diameter portion 52 as the inserted part, as compared with the case in which the large diameter portion 51 is inserted. Accordingly, it is possible to improve workability at the time of attachment of the airtight terminal 1 while reducing influences of heat at the time of the sealing when a composite material is used in the conductive terminal 50.

Here, many receptacle terminals included in conventional electric compressors driven at low voltages receive insertion of 3.0 mm to 3.4 mm conductive terminals, for example. Thus, the outer diameter Da2 of the small diameter portion 52 is set within a range of 3.0 mm to 3.4 mm. Accordingly, it is possible to use receptacle terminals similar to the conventional receptacle terminals as the receptacle terminal 92 to which the conductive terminal 50 is connected.

The outer diameter E of the core material 501 is set to be less than 50% of the outer diameter Da1 of the large diameter portion 51. Accordingly, it is possible to more effectively reduce influences of heat at the large diameter portion 51 that is likely to be affected by the heat at the time of the sealing. As a result, it is possible to more reliably reduce occurrence of a failure in air tightness at the parts sealed with the glass filling material 30.

The thickness dimension t1 of the outer skin material 502 at the large diameter portion 51 is set to be equal to or greater than 1 mm, and the thickness dimension t2 of the outer skin material 502 at the small diameter portion 52 is set to be equal to or greater than 0.5 mm. Accordingly, it is possible to appropriately obtain the effect of the thickness t2 of the outer skin material 502 even at the small diameter portion 52 with the thinner outer skin material 502 than the large diameter portion 51.

### (Second embodiment)

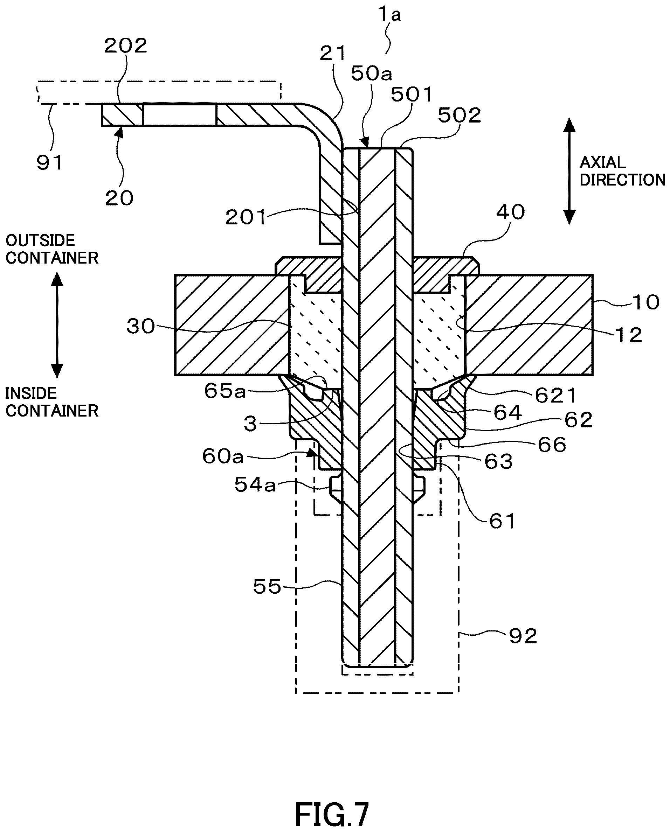

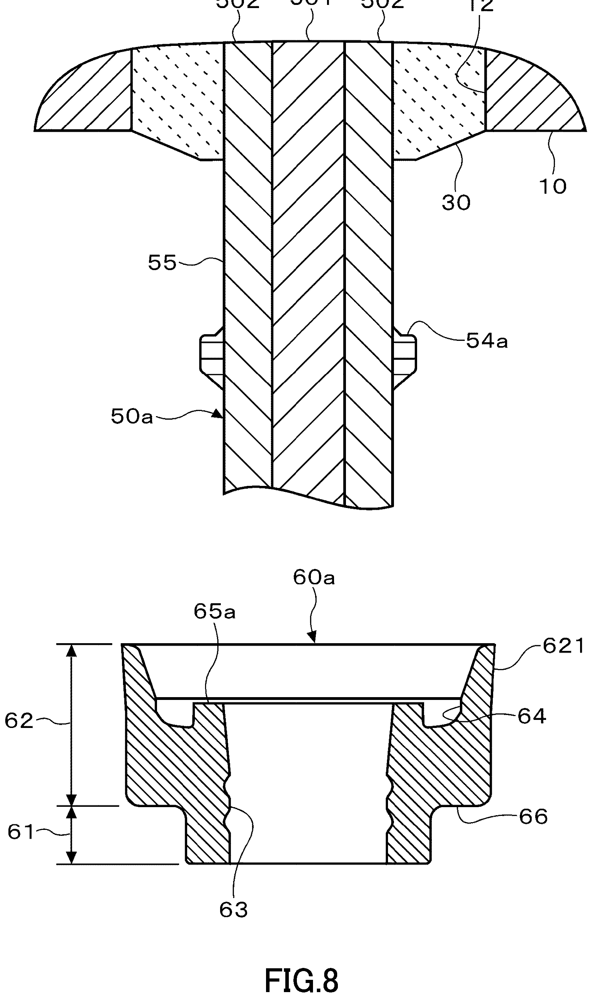

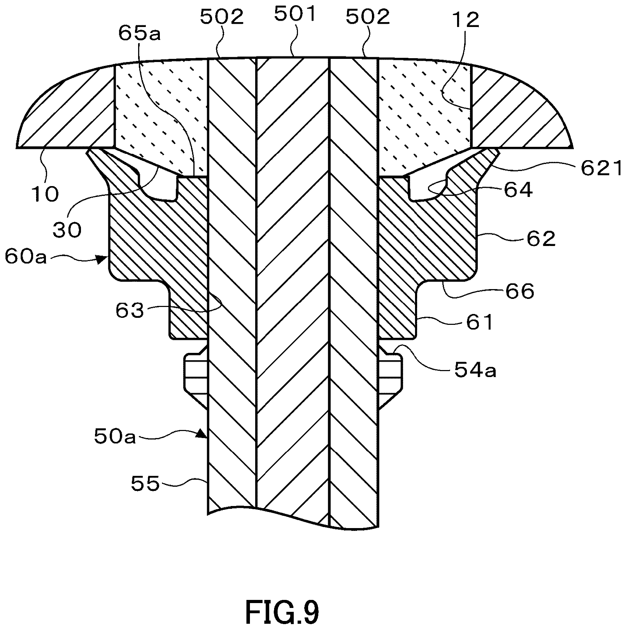

Next, a second embodiment will be described with reference to Figures 7 to 9. In an airtight terminal 1a in the present embodiment, specific configurations of the conductive terminal 50 and the protective member 60 are different from those of the airtight terminal 1 according to the first embodiment. The airtight terminal 1a in the present embodiment includes a conductive terminal 50a and a protective member 60a instead of the conductive terminal 50 and the protective member 60 of the airtight terminal 1. Also, the airtight terminal 1a in the present embodiment is configured such that the groove portion 67 in the airtight terminal 1 according to the first embodiment is not included.

The conductive terminal 50a includes a main body portion 55 and a retainer portion 54a. The main body portion 55 constitutes a main portion of the conductive terminal 50a and is formed into a columnar rod shape formed to have a constant outer diameter over the entire region of the entire length of the main body portion 55. In other words, the main body portion 55 is formed into a shape with no stepped portion, that is, a so-called straight pin. Also, the retainer portion 54a has a configuration corresponding to the retainer portion 54 in the first embodiment. The retainer portion 54a according to the present embodiment is provided by fixedly attaching an annular component, for example, formed separately from the main body portion 55 to the main body portion 55 through welding or the like. In this case, the retainer portion 54a may be formed of the same material as that of the main body portion 55 or may be formed of a different material.

The protective member 60a includes a restricting portion 65a instead of the restricting portion 65 in the first embodiment. Moreover, in the case of the present embodiment, a part of the surface of the glass filling material 30 with which the restricting portion 65a comes into contact is a locking portion 3. The restricting portion 65a is provided on the side of a metal substrate 10 with respect to a holding portion 63 similarly to the restricting portion 65 in the first embodiment. The restricting portion 65a has a function of coming into contact with the locking portion 3 and restricting movement of the protective member 60 on the side of the metal substrate 10 in a case in which the protective member 60 is attached to the conductive terminal 50 similarly to the restricting portion 65 in the first embodiment. In the case of the present embodiment, the restricting portion 65a is formed of an end portion on the side of the metal substrate 10, the end portion being of a cylindrical shape which is a projection of the cylindrical shape of the bottom part of the non-contact portion 64 on the side of the metal substrate 10.

Effects similar to those of the above first embodiment are obtained in the present embodiment as well. Also, according to the present embodiment, the conductive terminal 50a can be configured such that the main body portion 55 as the main part of the conductive terminal 50a is a so-called straight pin. Therefore, it is possible to reduce the number of producing steps for the conductive terminal 50a as compared with a case in which the small diameter portion 52 and the retainer portion 54 are formed through cutting.

### (Other embodiments)

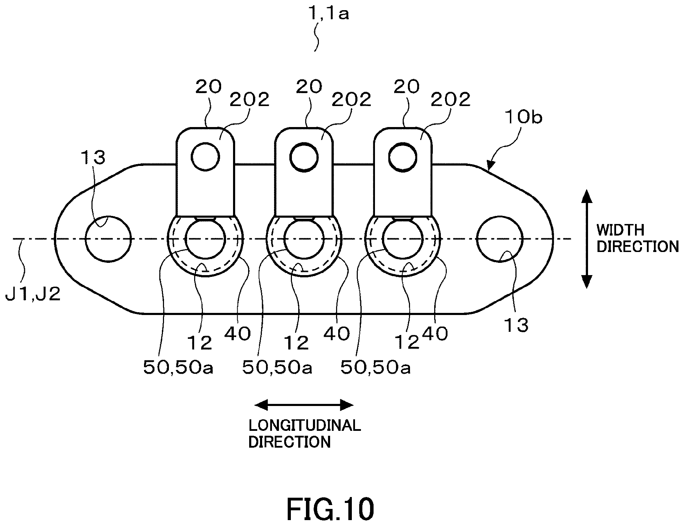

Note that the airtight terminals 1 and 1a may be configured to include a metal substrate 10b illustrated in Figure 10 instead of the metal substrate 10 in each of the above embodiments. In the example in Figure 10, the positions of two attachment holes 13 in the metal substrate 10b are different from those in the metal substrate 10 in each of the above embodiments. In this case, the two attachment holes 13 are provided on an extension line of the straight line J1 connecting the respective through-holes 12. The straight line J1 connecting the respective through-holes 12 overlaps the straight line J2 connecting to the two attachment holes 13.

Also, each of the above embodiments can be made by mutually combining or replacing characteristic parts of each embodiment. For example, the airtight terminal 1a in the second embodiment can be configured to include the groove portion 67 in the airtight terminal 1 in the first embodiment.

Each of the embodiments described above has been proposed as an example and is not intended to limit the scope of the present invention. The novel embodiments can be implemented in other various modes, and various omissions, replacements, and changes can be made without departing from the gist of the invention. The present embodiments and modifications thereof are included in the scope and the gist of the invention and are included in the inventions described in the claims and in a range equivalent thereto.

## Claims

1. An airtight terminal comprising:
a metal substrate in which a plurality of through-holes are formed;
a plurality of conductive terminals each introduced through the respective through-holes;
a glass filling material that has an electrical insulating property, fills between the through-hole and the conductive terminal, and seals between the through-hole and the conductive terminal;
a protective member that is formed of a material with an electrical insulating property and elasticity and covers around the conductive terminal with the conductive terminal introduced in the protective member; and
a locking portion that is provided in the conductive terminal or the glass filling material,
wherein the protective member includes
a holding portion that is provided in the protective member on a side opposite to a side of the metal substrate, is formed to have a smaller inner diameter than an outer diameter of the conductive terminal, and holds the conductive terminal,
a deformable portion that is provided on the side of the metal substrate with respect to the holding portion and is elastically deformable in a direction in which the deformable portion is compressed in contact with any one or both of the metal substrate and the glass filling material in a case in which the protective member is attached to the conductive terminal, and
a restricting portion that comes into contact with the locking portion and restricts movement of the protective member on the side of the metal substrate in the case in which the protective member is attached to the conductive terminal.

2. The airtight terminal according to claim 1, wherein the protective member is configured to be attachable to and detachable from the conductive terminal.

3. The airtight terminal according to claim 1 or 2, wherein the deformable portion is formed to have a larger inner diameter than the outer diameter of the conductive terminal and is configured to be elastically deformable in a direction in which the deformable portion spreads outward in a radial direction of the conductive terminal in the case in which the protective member is attached to the conductive terminal.

4. The airtight terminal according to any one of claims 1 to 3, wherein the protective member includes
a proximal end portion that is configured to include the deformable portion,
a distal end portion that includes the holding portion, has an outer diameter set to be smaller than an outer diameter of the proximal end portion, and is provided on the side opposite to the metal substrate with respect to the proximal end portion, and
a groove portion that is provided between the distal end portion and the proximal end portion, surrounds an outer periphery of the distal end portion, and has a shape obtained by recessing a stepped part formed by a difference between the outer diameters of the distal end portion and of the proximal end portion toward the deformable portion.

5. The airtight terminal according to any one of claims 1 to 4, wherein the conductive terminal further includes a retainer portion that is provided on the side opposite to the metal substrate with respect to the protective member, projects outward in a radial direction of the conductive terminal, and is formed to have a larger outer diameter than an outer diameter of the holding portion.

6. The airtight terminal according to claim 5, wherein a distance dimension between the locking portion and the retainer portion is set to be longer than a length dimension of the holding portion.

7. The airtight terminal according to any one of claims 1 to 6,
wherein the metal substrate further includes two attachment holes that are formed to penetrate through the metal substrate and allow fastening members for attaching the metal substrate to an attachment target to be introduced therethrough, and
the attachment holes are disposed at such positions that a straight line connecting the two attachment holes intersects a straight line connecting the respective through-holes.

8. The airtight terminal according to any one of claims 1 to 7, wherein the conductive terminal includes
a core material that is formed to have a constant outer diameter, and
an outer skin material that is formed of a member that has higher rigidity and heat resistance than the core material and has a thermal expansion coefficient that is equivalent to a thermal expansion coefficient of the glass filling material or has a value between thermal expansion coefficients of the glass filling material and of the core material.

9. The airtight terminal according to claim 8,
wherein the conductive terminal further includes
a large diameter portion that includes a part covered with the glass filling material, and
a small diameter portion that is provided on the side opposite to the metal substrate with respect to the large diameter portion and has an outer diameter set to be smaller than an outer diameter of the large diameter portion, and
the small diameter portion is formed by thinning a thickness of the outer skin material as compared with the large diameter portion.

10. The airtight terminal according to claim 9, wherein the outer diameter of the small diameter portion is set within a range of 3.0 mm to 3.4 mm.

11. The airtight terminal according to claim 9 or 10, wherein an outer diameter of the core material is set to be less than 50% of the outer diameter of the large diameter portion.

12. The airtight terminal according to any one of claims 9 to 11,
wherein a thickness dimension of the outer skin material at the large diameter portion is set to be equal to or greater than 1 mm, and
a thickness dimension of the outer skin material at the small diameter portion is set to be equal to or greater than 0.5 mm.
